(19) **Europäisches Patentamt**

**European Patent Office**

**Office européen des brevets**

(11) **EP 0 978 038 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(21) Anmeldenummer: **97940061.1**

(22) Anmeldetag: **08.08.1997**

(51) Int Cl.⁷: $G06F\ 11/00$, $H02P\ 6/00$

(86) Internationale Anmeldenummer:
**PCT/EP97/04318**

(87) Internationale Veröffentlichungsnummer:
**WO 98/007089 (19.02.1998 Gazette 1998/07)**

(54) **ANORDNUNG ZUR ÜBERWACHUNG EINES MIKROPROZESSORS**

DEVICE FOR MONITORING A MICROPROCESSOR

INSTALLATION DE SURVEILLANCE D'UN MICROPROCESSEUR

(84) Benannte Vertragsstaaten:
**AT CH DE FI FR GB IT LI SE**

(30) Priorität: **12.08.1996 DE 19632506**

(43) Veröffentlichungstag der Anmeldung:
**09.02.2000 Patentblatt 2000/06**

(73) Patentinhaber: **Papst-Motoren GmbH & Co. KG**
**78112 St. Georgen (DE)**

(72) Erfinder:
• **JESKE, Frank**
  **D-78144 Tennenbronn (DE)**
• **RAPPENECKER, Hermann**
  **D-78147 Vöhrenbach (DE)**

(56) Entgegenhaltungen:
**EP-A- 0 649 217**     **US-A- 4 429 236**
**US-A- 4 674 035**     **US-A- 4 879 647**
**US-A- 4 956 807**     **US-A- 5 017 846**
**US-A- 5 073 853**     **US-A- 5 081 625**
**US-A- 5 426 776**

## Beschreibung

Zur Erfüllung einfacher Aufgaben, z.B. zur Drehzahlüberwachung oder zur Steuerung von Motoren, kann man kostengünstige Mikrocontroller oder Mikroprozessoren verwenden; im folgenden werden beide Gattungen generisch als "Mikroprozessoren" bezeichnet. Solche kostengünstigen Mikroprozessoren enthalten oft nur ein Mindestmaß an Funktionen. Eine interne Watchdog-Schaltung ist bei ihnen meist nicht vorhanden.

Als Watchdog bezeichnet man eine Schaltung, die überwacht, ob der Mikroprozessor richtig arbeitet, und die bei Erkennen eines Fehlers entsprechende Schritte zur Abhilfe veranlaßt, z.B. einen Resetvorgang für den Mikroprozessor, damit dieser mit definierten Anfangswerten ("Initialisierung") ab einer bestimmten Programmstelle zu arbeiten beginnt. Teurere Mikroprozessoren haben meist eine solche Watchdog-Funktion integriert, oder sie haben extern eine entsprechende Zusatzschaltung.

Wenn eine solche WD-Schaltung fehlt, stellt sich das Problem, den Mikroprozessor sicher zu betreiben. Wenn dieser z.B. nach Einschalten der Betriebsspannung kein sauberes Reset (Power-Up-Reset) bekommt, startet u.U. sein Mikroprogramm nicht an einer definierten Stelle, was dann zu entsprechenden Fehlern führen kann. Auch kann ein solcher Mikroprozessor gestört werden durch äußere Einflüsse, z.B. durch Bursts, transiente Impulsgruppen etc. (Prüfungen nach IEC 801-2 und IEC 801-4). Ebenso können starke Schwankungen der Versorgungsspannung zu Fehlern des Programmablaufs führen.

In all diesen Fällen kann die Funktion des Mikroprozessors kurzzeitig gestört werden. Sofern der Mikroprozessor nach Beendigung der Störung wieder zu einer korrekten Wirkungsweise zurückfindet, bereitet dies keine Probleme, aber in einem solchen Fall kann sich der Mikroprozessor auch dauerhaft "aufhängen", d.h. er verharrt dann in einem undefinierten Zustand. In diesem Fall erfüllt der Mikroprozessor nicht mehr seine gewünschte Funktion, was gewöhnlich nicht zulässig ist.

Aus diesem Grunde kennt man eine Vielzahl von Schaltungen zur Überwachung solcher Mikroprozessoren, z.B. aus der DE 32 14 006 A1 oder der EP-A1,0658973.

Eine Anordnung nach der zuletzt genannten Schrift ist besonders kostengünstig und sicher, erfordert aber eine spezielle Programmstruktur, damit bei einem Resetvorgang keine Informationen verlorengehen. Da bei dieser Anordnung bei jeder Motorumdrehung ein Resetvorgang stattfindet, müssen diese Resetvorgänge in Programmabschnitte fallen, bei denen die durch den Resetvorgang entstehende Unterbrechung keine schädlichen Folgen hat. Eine solche Programmstruktur ist nicht bei allen Anwendungen möglich, z.B. dann nicht, wenn das Mikroprogramm vor allem aus Softwarezählern besteht, die durch die Einwirkungen eines solchen Resetvorgangs ständig gestört würden. Damit würde eine korrekte Echtzeitmessung sehr schwierig.

Auch ist eine solche bekannte Anordnung mit zyklischen Resetvorgängen dann wirkungslos, wenn diese Resetsignale vollständig ausbleiben. Dies ist z.B. bei einem Motor dann der Fall, wenn der Rotor blockiert wird und demzufolge keine Resetsignale mehr erzeugt werden. Gerade bei kleinen Motoren, die z.B. zum Antrieb von Gerätelüftern verwendet werden und nur kleinere Leistungen haben (beispielsweise von 1 bis 3 W), kann der Rotor durch äußere Einflüsse leicht blockiert werden, und dann finden in einem solchen Fall keine Resetvorgänge mehr statt.

Ferner kennt man aus der US-A,5 426 776 eine Watchdogschaltung für einen Mikroprozessor. Hierbei wird an einem sogenannten Status-Ausgang eines Mikroprozessors im Betrieb eine Frequenz erzeugt, und diese wird laufend überwacht. Die Schaltung hat hierzu einen Kondensator, der ständig über einen Widerstand aufgeladen und über eine Ladungspumpe entladen wird, und diese Ladungspumpe wird von der Frequenz am Status-Ausgang gesteuert. Bei normaler Frequenz pumpt sie ständig genügend Ladung aus dem genannten Kondensator ab, so daß dessen Ladespannung unter einem Schwellwert gehalten wird. Sinkt diese Frequenz oder wird zu Null, so wird der Pumpvorgang schlechter, die Ladespannung steigt, und diese erhöhte Spannung bewirkt die Erzeugung von Resetsignalen durch einen Komparator. Wird die Frequenz am Status-Ausgang zu hoch, so kommt die Ladungspumpe nicht mehr richtig mit, die genannte Ladespannung wird ebenfalls zu hoch, und der Komparator erzeugt ebenfalls Resetsignale. Nachteilig ist der erhebliche Aufwand an Bauteilen bei dieser bekannten Schaltung.

Es ist eine Aufgabe der Erfindung, eine neue Watchdog-Schaltung zur Überwachung eines Mikroprozessors oder Mikrocontrollers bereitzustellen.

Nach der Erfindung wird diese Aufgabe gelöst durch den Gegenstand des Patentanspruchs 1. Da die Ladespannung des Kondensators bei dieser Schaltung dem Reseteingang des Mikroprozessors zugeführt wird, kann dieser Kondensator auch die Funktion des Power-Up-Reset übernehmen, da er ja beim Einschalten des Mikroprozessors entladen ist. Ebenso wird in sehr einfacher Weise ein Resetvorgang ausgelöst, wenn am Steuerausgang des Mikroprozessors ein vorgegebenes Signal ausbleibt, z.B. durch "Abstürzen" des Programms. Und wenn - ebenfalls durch einen Fehler im Programmablauf - die Entladung des Kondensators durch den Entladekreis nicht richtig funktioniert, so daß seine Ladespannung zu hoch wird, wird ebenfalls ein Resetsignal für den Mikroprozessor erzeugt. Insgesamt ergibt sich so ein sehr einfacher und preiswerter Aufbau einer solchen Schaltung, bei sicherer Funktion.

Eine vorteilhafte Weiterbildung der Erfindung ist Gegenstand des Patentanspruchs 5. Ein solcher zyklischer Programmablauf mit Abfrage einer Speicherzelle erfordert nur wenige Programmschritte, und man erhält so in sehr einfacher Weise an einem Ausgang des Mikroprozessors ein auswertbares Signal, aus dem ein Resetsignal abgeleitet werden kann.

Man erhält so eine einfache, platzsparende und kostengünstige Watchdog-Anordnung, die auf kleinen Leiterplatten realisierbar ist. Mit ihr kann auch in stark gestörter Umgebung ein sicherer Betrieb eines Geräts aufrechterhalten werden, und es ist möglich, in den amtlichen Prüfungen höhere Störklassen zu erreichen. Außerdem läuft dabei der Mikroprozessor unabhängig vom (langsamen oder schnellen) Anstieg seiner Betriebsspannung sicher an. Die Erfindung kann auch bei Mikroprozessoren verwendet werden, die einen internen WD (Watchdog) haben, da sich durch einen externen WD die Betriebssicherheit zusätzlich erhöht. (Auch der interne WD kann einer Störung unterliegen und nicht funktionieren, und in diesem Fall wird dann der externe WD wirksam).

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:

Fig. 1          das Prinzipschaltbild eines Mikrocontrollers mit einer zugehörigen Watchdog-Schaltung,

Fig. 2          die verschiedenen Ein- und Ausgänge des Mikrocontrollers NEC17103GS, wie er in der vorliegenden Schaltung verwendet werden kann,

Fig. 3          das Flußdiagramm einer ersten Variante des Programmablaufs, mit der an einem Ausgang des Mikrocontrollers im normalen Betrieb periodische Impulse erzeugt werden können,

Fig. 4          eine zweite Variante des Mikroprogramms zur Erzeugung periodischer Impulse,

Fig. 5          ein Diagramm zur Erläuterung der am Ausgang 15 des Mikroprozessors 20 im Normalbetrieb erzeugten Impulse POB2,

Fig. 6          ein Diagramm analog Fig. 5, aber bei einer Störung erster Art im Mikroprozessor,

Fig. 7          ein Diagramm analog Fig. 5, aber bei einer Störung zweiter Art im Mikroprozessor,

Fig. 8          ein Diagramm zur Erläuterung der Wirkungsweise von Fig. 1, 13 oder 14,

Fig. 9A und 9B     Diagramme zur Erläuterung der Wirkungsweise von Fig. 1, 9 oder 14 bei Normalbetrieb,

Fig. 10A und 10B   Diagramme zur Erläuterung der Wirkungsweise bei einem Fehler der in Fig. 6 dargestellten Art,

Fig. 11A und 11B   Diagramme zur Erläuterung der Wirkungsweise bei einem Fehler der in Fig. 7 dargestellten Art,

Fig. 12         Diagramme zur Erläuterung der Wirkungsweise beim Einschalten,

Fig. 13         eine Variante zu der in Fig. 1 dargestellten Anordnung,

Fig. 14         eine Schaltung zur Drehzahlüberwachung, welche unter Verwendung der Variante gemäß Fig. 13 aufgebaut ist,

Fig. 15         ein Diagramm zur Erläuterung der Signale Hall-N, welche in Fig. 14 vom Sensor 124 erzeugt werden, wenn sich der Rotor R dreht, und

Fig. 16         ein Flußdiagramm zur Erläuterung des in den Fig. 3 und 4 mit S70 bezeichneten Programmteils bei der Verwendung einer erfindungsgemäßen Anordnung in der Schaltung gemäß Fig. 14.

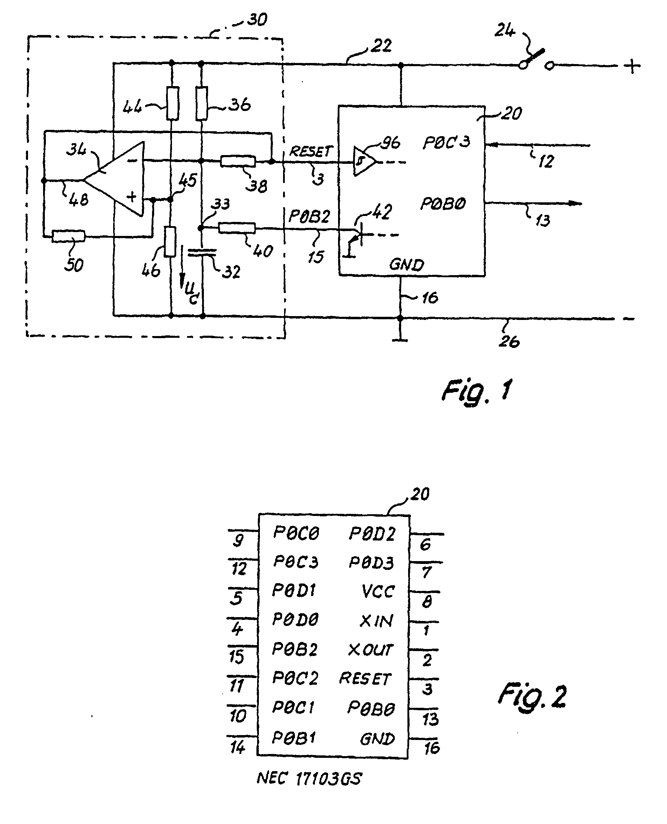

Fig. 1 zeigt rechts einen Mikroprozessor 20, der über eine Plusleitung 22 und einen darin angeordneten Schalter 24, sowie über eine Minusleitung 26, mit Strom versorgt wird, z.B. 5 V Gleichspannung. Wenn der Schalter 24 geschlossen wird, muß der Mikroprozessor 20 richtig starten, wozu ein Resetvorgang notwendig ist, der als Power-Up-Reset bezeichnet wird, wozu an den Reseteingang 3 ein niedriges Signal einer vorbestimmten Mindestdauer angelegt werden muß.

Der Mikroprozessor 20 kann z.B. der in Fig. 2 dargestellte Mikrocontroller 17103GS der Firma NEC sein, der keine interne WD-Schaltung hat. Die dargestellte Schaltung eignet sich aber naturgemäß für jede Art von Mikroprozessor oder Mikrocontroller, und Fig. 2 stellt nur ein bevorzugtes Ausführungsbeispiel dar, mittels dessen die Erfindung an einem konkreten Beispiel erläutert werden kann (WD = Watchdog).

In Fig. 1 ist links vom Mikroprozessor 20 eine WD-Schaltung 30 dargestellt, die im Prinzip einen Oszillator darstellt, der bei normalem Betrieb durch den Mikroprozessor 20 daran gehindert wird, zu oszillieren, der aber zu oszillieren beginnt - gewöhnlich nur eine einzige Oszillation -, wenn der Mikroprozessor 20 nicht richtig funktioniert. Durch diese Oszillation wird ein Resetsignal für den Eingang 3 erzeugt, und dieses bewirkt dann einen Neuanlauf des Mikroprozessors 20 ab einer bestimmten Programmstelle, und mit einer vorgegebenen Initialisierung.

Die WD-Schaltung 30 enthält einen Kondensator 32, dessen einer Anschluß mit der Minusleitung 26 und dessen anderer Anschluß 33 mit dem Minuseingang eines Komparators 34 verbunden ist. Außerdem ist der Anschluß 33 über einen Widerstand 36 mit der Plusleitung 22, über einen Widerstand 38 mit dem Reseteingang 3, und über einen Widerstand 40 mit einem Ausgang 15 des Mikroprozessors 20 verbunden, an dem im Betrieb ein Signal POB2 anliegt. Dieser Ausgang 15 hat im Inneren des Mikroprozessors 20 einen npn-Transistor 42 mit open collector, also offenem Kollektor (wie dargestellt); wenn der Transistor 42 leitend ist, hat der Ausgang 15 ein niedriges Potential, und wenn der Transistor 42 nichtleitend ist, hat der Ausgang 15 ein hohes Potential, Bei normalem Betrieb des Mikroprozessors 20 wird dieser Transistor 42 periodisch geöffnet und geschlossen, und wenn er geschlossen wird, fließt vom Kondensator 32 ein Entladestrom über den Widerstand 40 und den Transistor 42. Ist der Transistor 42 geöffnet, so fließt kein Entladestrom, und der Kondensator 32 kann sich über den Widerstand 36 aufladen.

Der Pluseingang des Komparators 34 ist über einen Spannungsteiler aus den Widerständen 44 und 46 an einen Punkt 45 mit vorgegebenem Potential gelegt, z.B. bei einer Betriebsspannung von 5 V mit einem Potential von +4,5 V. Der Ausgang 48 des Komparators 34 ist direkt mit dem Reseteingang 3 und über einen Widerstand 50 mit dem Pluseingang des Komparators 34 verbunden.

**Typische Werte:**

Spannung zwischen den Leitungen 22 und 26: 5 V

| Mikroprozessor 20 | NEC 17103 GS |
|---|---|
| Komparator 34 | LM2903 (SGS) |
| Kondensator 32 | 100 nF |
| Widerstand 36 | 20 kΩ |
| Widerstände 38, 46 | 100 kΩ |
| Widerstand 40 | 3 kΩ |
| Widerstand 44 | 10 kΩ |
| Widerstand 50 | 220 kΩ |

Dem Eingang 12 des Mikroprozessors 20 werden im Betrieb von außen Signale zugeführt, die der Mikroprozessor intern nach vorgegebenen Regeln auswertet, wobei er dann an einem Ausgang 13 (oder auch an mehreren Ausgängen) entsprechende Ausgangssignale abgibt.

**Arbeitsweise der WD-Schaltung 30**

Zur Erläuterung der Arbeitsweise wird zunächst angenommen, daß der Widerstand 40 den Wert unendlich hat, d.h. daß der open-collector-Transistor 42 nichtleitend ist.

Beim Einschalten des Schalters 24 fließt über den Widerstand 36 ein Ladestrom zum Kondensator 32 und erhöht die Spannung $u_C$ an diesem. Da beim Einschalten der Kondensator 32 entladen ist, ist beim Einschalten $u_C$ = 0, und folglich erhält in diesem Fall der Eingang 3 des Mikroprozessors 20 das erforderliche Resetsignal für einen Power-Up-Reset.

Erreicht die Spannung $u_C$ das Potential am Knotenpunkt 45, also z.B. + 4,5 V, so schaltet der Komparator 34 um, d.h. sein zuvor hoher Ausgang 48 erhält nun das Potential der Minusleitung 26. Über den Widerstand 50 wird bewirkt, daß hierbei das Potential am Knotenpunkt 45 etwas sinkt, also z.B. von + 4,5 auf + 4,0 V, so daß jetzt der Kondensator 32 über den Widerstand 38 und den Komparator 34 so weit entladen wird, bis die Spannung $u_C$ unter 4,0 V gesunken ist.

Bei Erreichen dieser Spannung schaltet der Komparator 34 wieder um, sein Ausgang 48 wird wieder hoch, das Potential am Knotenpunkt 45 springt wieder auf 4,5 V, und der Kondensator 32 wird erneut über den Widerstand 36 geladen, bis die Spannung $u_C$ wieder den Wert 4,5 V erreicht.

Die Spannung $u_C$ pendelt also in diesem Fall z.B. zwischen 4,0 und 4,5 V, und die Schaltung 30 wirkt dann als Oszillator, der an seinem Ausgang 48 periodisch Resetimpulse an den Eingang 3 abgibt.

Das Prinzip der Gesamtschaltung nach Fig. 1 ist, daß man bei normalem Betrieb des Mikroprozessors 20 durch periodisches Leitendwerden des Transistors 42 den Kondensator 32 ständig so weit entlädt, daß die Spannung $u_C$ nicht den Wert von z.B. 4,5 V erreichen kann, bei dem der Komparator 34 umschaltet, sondern z.B. nur im Bereich 4...4,2 V liegt.

Dagegen findet bei einem Fehler des Programmablaufs diese periodische Entladung über den Transistor 42 und den Widerstand 40 nicht statt, so daß die Spannung $u_C$ den Wert 4,5 V erreicht und eine Oszillation der WD-Schaltung 30 stattfindet, um ein Resetsignal am Eingang 3 auszulösen. Im Normalfall findet nur eine einzige Oszillation statt, da gewöhnlich das einmalige LOW (niedrige Potential) am Reseteingang 3 genügt, um im Mikroprozessor 20 einen definierten Resetvorgang zu bewirken.

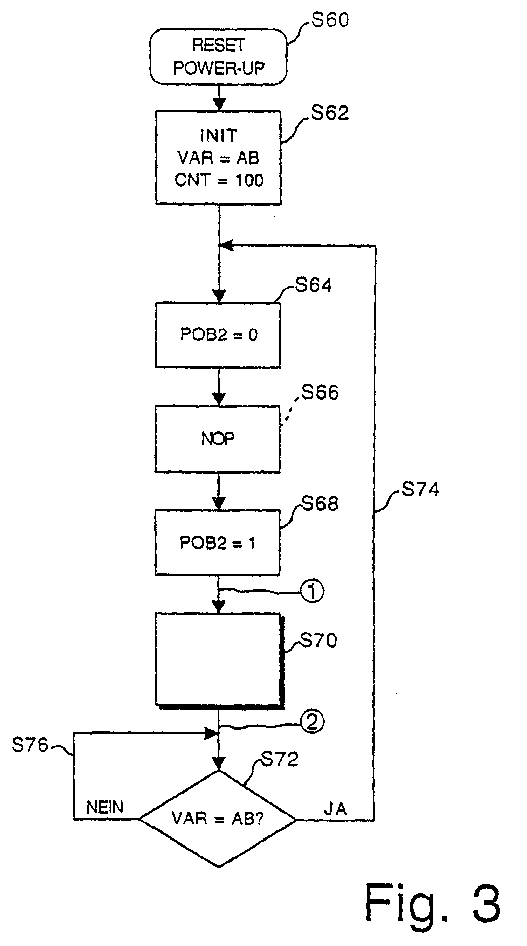

**Fig. 3** zeigt das Flußdiagramm für eine erste Variante eines geeigneten Programms zur Erzeugung eines periodischen Signals am Ausgang P0B2 und zur gleichzeitigen Überwachung der ordnungsgemäßen Funktion des Mikroprozessors 20. Beim Schritt S60 findet ein Resetvorgang statt, z.B. ein Resetvorgang bei einem Fehler, oder ein Power-Up-Reset beim Einschalten des Schalters 24. Beim Schritt S62 findet eine Initialisierung statt, d.h. Register werden auf bestimmte Werte gesetzt; als Beispiel ist angegeben, daß der Wert eines Zählers CNT (im Mikroprozessor 20) auf 100 gesetzt wird, vgl. die nachfolgende Fig. 16, und in einem Speicher VAR wird der Wert AB gespeichert. Die Größe AB kann z.B. eine Folge mehrerer Bits sein, z.B. 011001. Je höher die Zahl dieser Bits ist, umso zuverlässiger arbeitet die Schaltung.

Im Schritt S64 wird der Transistor 42 im Mikroprozessor 20 leitend gemacht, so daß P0B2 = 0 wird. Im fakultativen Schritt S66 können ein oder mehrere NOP-Befehle folgen, wobei sich in der Praxis gezeigt hat, daß diese NOP-Befehle in vielen Fällen entfallen können. Der Grund hierfür ist, daß oft bereits die Zeitdauer der Schritte S64 und S68 für eine ausreichende Entladung des Kondensators 32 genügt.

Im Schritt S68 wird der Transistor 42 wieder geöffnet, so daß P0B2 = 1 wird. Im Programmabschnitt S70 erfolgen die eigentlichen Arbeitsschritte des Mikroprozessors 20, also die Auswertung von Daten, z.B. Steuerung, Regelung, etc. Ein solcher Programmabschnitt wird nachfolgend beispielhaft anhand der Fig. 16 erläutert. Bei einem elektronisch kommutierten Motor kann dieser Programmabschnitt z.B. zur Steuerung der Kommutierung, zur Strombegrenzung, oder zur Regelung der Drehzahl dienen, um nur einige Beispiele zu nennen.

Im Schritt S72 erfolgt die Abfrage des Speichers VAR, d.h. es wird geprüft, ob dieser den Wert AB enthält. Ist dies der Fall, so ist dies ein Zeichen, daß der Mikroprozessor normal arbeitet und normal den Schritt S62 durchlaufen hat, und das Programm springt dann über die Schleife S74 zurück zum Schritt S64.

Wird im Schritt S72 festgestellt, daß der Speicher VAR nicht den Wert AB enthält, so ist dies ein Zeichen dafür, daß ein Fehler aufgetreten ist, und in diesem Fall geht das Programm in eine Endlosschleife S76, d.h. die Schritte S64 bis S70 werden nicht mehr durchlaufen. Dadurch bleibt der Transistor 42 nichtleitend, und das Signal P0B2 behält ständig den Wert 1, so daß der Kondensator 32 jetzt auf eine höhere Spannung geladen wird und der Oszillator 30 zu schwingen beginnt. Bei seiner ersten Oszillation erzeugt er am Ausgang 48 des Komparators 34 ein niedriges Signal, welches dem Eingang 3 des Mikroprozessors 20 zugeführt wird und dort einen Resetvorgang auslöst, so daß der Programmablauf erneut im Schritt S60 beginnt und dadurch der Fehler im Programmablauf behoben wird. Dadurch hört die Oszillation des Oszillators 30 sofort wieder auf, d.h. im Normalfall erzeugt dieser bei einem solchen Vorgang nur einen einzigen Resetimpuls und wird dann sofort wieder inaktiv.

Es ist klar, daß das Flußdiagramm gemäß Fig. 3 nur dann angewendet werden darf, wenn eine WD-Schaltung vorgesehen ist, denn ohne diese Schaltung würde sich bei einem Fehler der Mikroprozessor 20 in der Endlosschleife S76 aufhängen und seinen Dienst verweigern.

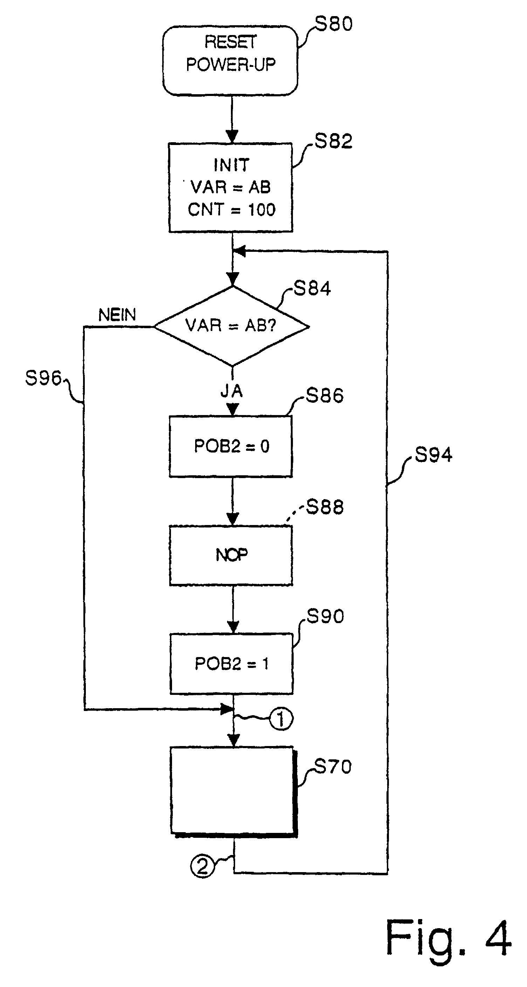

**Fig. 4** zeigt das Flußdiagramm für eine zweite Variante eines geeigneten Programms zur Erzeugung eines periodischen Signals P0B2 am Ausgang 15. Das Flußdiagramm nach Fig. 4 hat den Vorteil, daß es auch angewandt werden kann, wenn aus Kostengründen die WD-Schaltung 30 weggelassen werden soll, d.h. wenn eine sichere Funktion des Mikroprozessors 20 zwar gewünscht wird, aber nicht um jeden Preis.

Im Schritt S80 erfolgt wieder ein Resetvorgang, z.B. beim Einschalten, ebenso wie beim Schritt S60 beschrieben. Ebenso erfolgt im nachfolgenden Schritt S82 eine Initialisierung, und der Speicher VAR wird mit dem Wert AB geladen, also einer festgelegten Bitfolge, genauso, wie beim Schritt S62 beschrieben, und der Inhalt eines Zählers CNT (im Mikroprozessor 20) wird z.B. auf 100 gesetzt. (Zum Zähler CNT vgl. Fig. 16).

Im anschließenden Schritt S84 wird der Speicher VAR abgefragt, ob er den Wert AB enthält. Ist dies der Fall, so geht das Programm weiter zum Schritt S86, wo der Transistor 42 leitend gemacht wird, d.h. daß das Signal P0B2 = 0 wird. Im nachfolgenden, fakultativen Schritt S88 können ein oder mehrere NOP-Befehle folgen, oder prinzipiell Befehle, die eine festgelegte Zeit verbrauchen und praktisch wie ein Zeitglied wirken. In der Praxis hat es sich herausgestellt, daß solche NOP-Befehle in vielen Fällen an dieser Stelle entfallen können, da die Programmlaufzeit der Schritte S86, S90 für die Entladung des Kondensators 32 genügt. Im Schritt S90 wird der Transistor 42 wieder nichtleitend gemacht, so daß das Signal P0B2 = 1 wird, d.h. eine Entladung des Kondensators 32 findet nur zwischen den Schritten S86 und S90 statt.

Im Schritt S70, der mit dem Schritt S70 von Fig. 3 übereinstimmt, laufen die eigentlichen Arbeitsvorgänge des Mikroprozessors 20 ab, also z.B. Regelung, Steuerung oder dergleichen. Dies wird nachfolgend anhand der Fig. 16 erläutert. Nachdem das Programm diese Arbeitsvorgänge abgearbeitet hat, geht es über die Schleife S94 zurück zum Schritt S84.

Wird im Schritt S84 festgestellt, daß der Speicher VAR nicht den Wert AB enthält, so überspringt das Programm (Pfeil S96) die Programmschritte S86, 88 und 90 und geht direkt zum Schritt S70, d.h. in diesem Fall bleibt der Transistor 42 ständig nichtleitend, und folglich wird der Kondensator 32 in diesem Fall nicht entladen, so daß die WD-Schaltung 30 zu oszillieren beginnt und am Ausgang des Komparators 34 einen Resetimpuls an den Eingang 3 des Mikroprozessors 20 abgibt, wodurch das Programm zum Schritt S80 zurückspringt und neu zu arbeiten beginnt. Dabei wird dann der Wert AB in den Speicher VAR geladen, so daß in der nachfolgenden Abfrage S84 die Antwort positiv ist und erneut am Ausgang POB2 des Mikroprozessors 20 periodische Signale erzeugt werden, welche die gewünschte Teilentladung des Kondensators 32 bewirken.

Wie bereits erläutert, kann ein Mikroprozessor 20 mit dem Flußdiagramm gemäß Fig. 4 auch dann arbeiten, wenn die WD-Schaltung 30 weggelassen wird, da in diesem Fall bei einem Programmfehler einfach die Schritte S86, 88 und 90 übersprungen werden, aber das eigentliche Programm (in S70) unverändert weiterläuft, solange sich der Mikroprozessor nicht vollständig aufhängt.

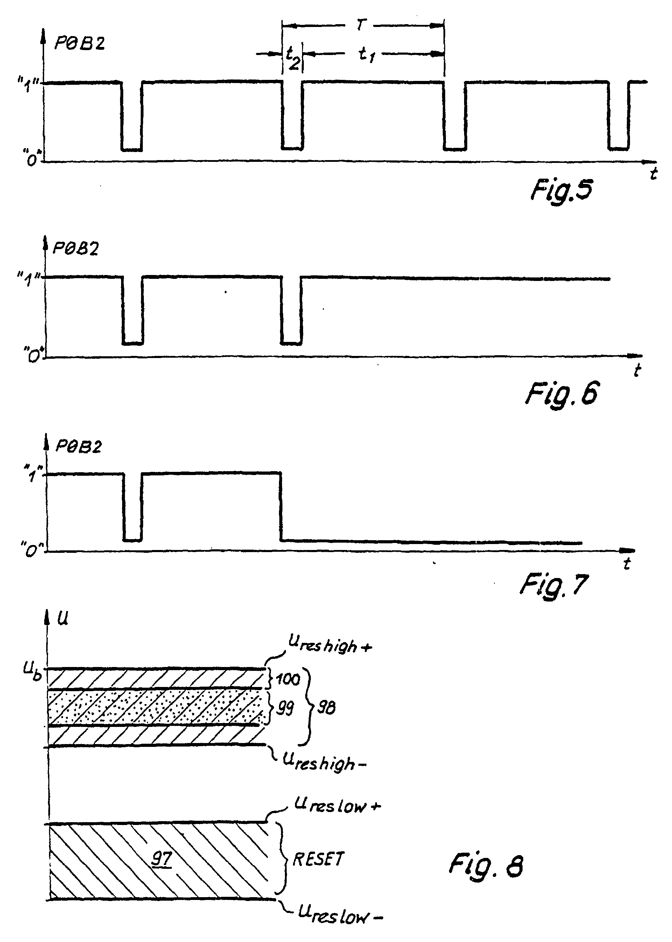

Zur Erläuterung der Fig. 1 bis 4 wird auf **Fig. 5** Bezug genommen.

Wie man erkennt, stellen die Flußdiagramme nach Fig. 3 oder 4 zyklische Prozesse dar, d.h. beim normalen Betrieb durchläuft das Programm in Fig. 3 die Schritte S64, 66, 68, 70, 72 und geht dann über die Schleife S74 zurück zum Schritt S64. Die Zeit T (Fig. 5), die für einen einmaligen Durchlauf (von S64 bis S64) benötigt wird, kann z.B. 50 µs betragen und hängt ab

    a) von der Zahl der Programmschritte und
    b) von der Taktfrequenz des Mikroprozessors 20, die z.B. 1 MHz beträgt. Bei einer Zeit von 50 µs ergibt sich also eine Frequenz von 20 kHz für das Signal P0B2.

Gemäß Fig. 5 setzt sich die Zeit T zusammen aus $t_1$ und $t_2$. Die Zeit $t_2$ ist in Fig. 3 der Zeitraum zwischen den Schritten S64 und S68, in welchem P082 = 0 ist. In der übrigen Zeit $t_1$ ist P0B2 = 1. Nur während der Zeit $t_2$ wird der Kondensator 32 über den Widerstand 40 kurzzeitig etwas entladen, und dies mit einer Frequenz von z.B. 20 kHz, also 20.000 mal in der Sekunde. Während der Zeit $t_1$ wird der Kondensator 32 über den Widerstand 36 geladen.

Die Verhältnisse bei Fig. 4 sind völlig analog. Auch hier durchläuft das Programm bei normalem Betrieb die Schritte S84, 86, 88, 90, 70 und geht dann zurück zum Schritt S84. Für einen solchen Durchlauf benötigt es z.B. eine Zeit T von 50 µs entsprechend einer Frequenz von 20 kHz, und auch hier wird die Zeit $t_2$ (Fig. 5) bestimmt durch die Schritte S64, 66, 68.

Solange das Programm ordnungsgemäß läuft, ergibt sich also das Bild gemäß Fig. 5, wobei die Zeit T, also die Frequenz, ggf. etwas schwanken kann, aber im wesentlichen konstant ist. Das Tastverhältnis des Signals P0B2 kann, wie dargestellt, etwa 1 : 10 betragen.

Wird bei Fig. 3 oder 4 festgestellt, daß die Speicherzellen VAR nicht die Werte AB enthalten, so bleibt P0B2 = 1, d.h. es ergibt sich das Bild nach Fig. 6, und die Frequenz dieses Signals wird zu Null. Auch wenn sich das Programm an einer Stelle "aufhängt", kann dies zum Dauerzustand P0B2 = 1 führen.

Das Bild nach Fig. 7 ergibt sich, wenn sich das Programm in Fig. 3 zwischen den Schritten S64 und 68 aufhängt, oder in Fig. 4 zwischen den Schritten S86 und 90, d.h. dann wird P0B2 = 0, und die Frequenz dieses Signals wird ebenfalls zu 0.

In den Fällen nach Fig. 6 und 7 muß ein Resetimpuls erzeugt werden, damit das Programm in Fig. 3 wieder bei S60 beginnt, oder in Fig. 4 bei S80. Dies wird erreicht durch die WD-Schaltung 30 der Fig. 1.

Wie in Fig. 1 dargestellt, hat der Reset-Anschluß 3 des Mikroprozessors 20 einen Schmitt-Trigger-Eingang 96. Dies ist bei den Reseteingängen der meisten Mikroprozessoren der Fall. Gemäß Fig. 8 findet ein Resetvorgang statt, wenn das Signal RESET einen niedrigen Wert (LOW) hat, der in einem Bereich 97 zwischen 0 V und etwa 1/3 x Ub liegt, also zwischen $U_{reslow-}$ und $U_{reslow+}$. Dagegen findet sicher kein Resetvorgang statt, wenn das Signal RESET in einem hohen Bereich 98 (HIGH) zwischen 2/3 x Ub und Ub liegt, also zwischen $U_{reshigh-}$ und $U_{reshigh+}$.

Die Wirkung der WD-Anordnung gemäß Fig. 1 beruht darauf, daß bei normalem, störungsfreiem Betrieb die Spannung $u_C$ am Kondensator 32 in einem "sicheren" Bereich oder Band 99 gehalten wird, das innerhalb des Bereichs 98 liegt, also

    a) oberhalb von $U_{reshigh-}$, weshalb mit Sicherheit kein Resetvorgang ausgelöst wird, und
    b) unterhalb von $U_{reshigh+}$.

Unterhalb von $U_{reshigh+}$ und oberhalb des Bandes 99 liegt ein Bereich oder Band 100, und das Potential des Punktes 45 in Fig. 1 ist auf einen Wert in diesem Bereich 100 eingestellt, d.h. wenn die Spannung $u_C$ diesen Bereich 100 erreicht, ist dies ein Zeichen, daß ein Fehler vorliegt, und in diesem Fall reagiert die Schaltung 30 in der bereits beschriebenen Weise und erzeugt einen Resetimpuls. Dies ist dann der Fall, wenn der Fehler gemäß Fig. 6 auftritt, da dann der Kondensator 32 nicht mehr entladen wird und folglich die Spannung $u_C$ in den Bereich 100 ansteigt.

Wenn umgekehrt der Fehler gemäß Fig. 7 auftritt, wird der Kondensator 32 kontinuierlich über den Wiederstand 40 und den Transistor 42 entladen, und die Spannung $u_C$ nimmt dann den Wert an, der durch das Verhältnis der Widerstände 36 und 40 gegeben ist, das im vorliegenden Fall etwa 6 bis 8 betragen kann, d.h. die Spannung $u_C$ sinkt dann auf einen Wert im Bereich 97, also unterhalb von $U_{reslow+}$, so daß ein Resetvorgang ausgelöst wird, der das Programm wieder zum Laufen bringt. Dieses Verhältnis muß einen sicheren Resetvorgang bei niedrigem $u_C$ ermöglichen.

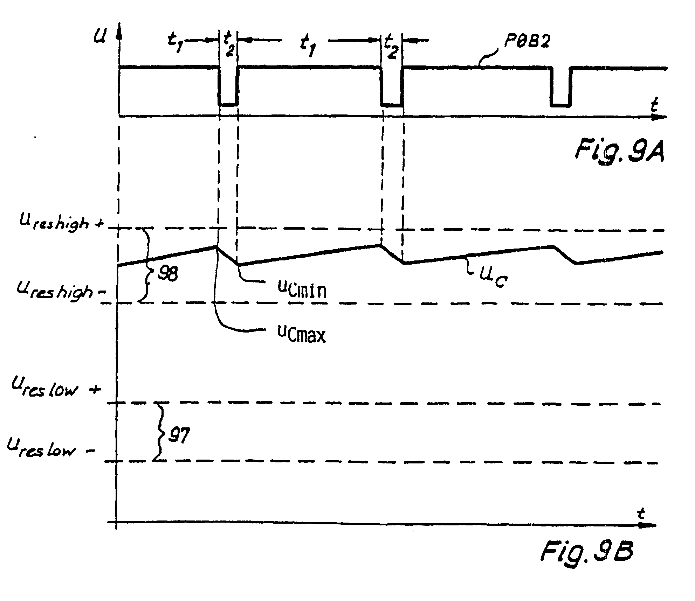

Die **Fig. 9A und 9B** zeigen den Fall des normalen Betriebs, d.h. am Ausgang 15 des Mikroprozessors 20 liegt das Signal POB2 (Fig. 9A) mit einer Frequenz von z.B. 20 kHz und einem Tastverhältnis von z.B. 1 : 10. Beide Größen sind im normalen Betrieb im wesentlichen invariant und führen zu einem Entladestrom vorgegebener Größe über den Widerstand 40, und der Mittelwert dieses Entladestroms entspricht dann dem Mittelwert des Ladestroms über den Widerstand 36, so daß die Spannung $u_C$ (Fig. 9B) innerhalb des Bereichs 98 liegt, aber unterhalb von dessen oberer Grenze $U_{reshigh+}$. Jeweils während der Zeit $t_2$ wird der Kondensator 32 entladen, und während der Zeit $t_1$ wird er geladen, vgl. Fig. 9B, und man erhält ein stabiles Gleichgewicht, d.h. der Mittelwert von $u_C$ bleibt in diesem Fall konstant, Die Maxima der Spannung $u_C$ sind in Fig. 9B mit $u_{Cmax}$ bezeichnet, die Minima mit $u_{Cmin}$.

Dies soll nachfolgend an einem Zahlenbeispiel erläutert werden. Hierfür werden folgende Werte angenommen (diese weichen zum Teil von den weiter oben genannten Werten ab):

| | |
|---|---|
| Betriebsspannung $U_B$ an der Leitung 22 | + 5,5 V |
| $U_{reshigh+}$ | + 4,0 V |
| $U_{reshigh-}$ | + 3,4 V |

Durch den Programmablauf vorgegebene Zeiten:

| | |
|---|---|
| $t_1$ | 44 µs |
| $t_2$ | 5,4 µs |

Die Zeit $t_2$ wird z.B. in Fig. 3 für die Schritte S64, S66, S68 benötigt, die Zeit $t_1$ für die Schritte S70 und S72.

Die Spannung am Kondensator 32 sollte deshalb bei diesem Beispiel im normalen Betrieb liegen zwischen $u_{Cmin}$ = 3,5 V und $u_{Cmax}$ = 3,9 V.

Dies entspricht in Fig. 8 dem Bereich 99.

Ferner werden bei diesem Beispiel folgende Werte angenommen:

| | |
|---|---|
| Widerstand 36 | 10 kΩ |
| Widerstand 40 | 2,4 kΩ |
| Kondensator 32 | 22 nF |

Während der Zeit $t_1$ (Fig. 9A) lädt sich der Kondensator 32 über den Widerstand 36 nach einer e-Funktion auf. Für die Zeit der Aufladung des Kondensators von $u_{Cmin}$ auf $u_{Cmax}$ ergibt sich angenähert:

$$t_1 = ((u_{Cmax} - u_{Cmin}) \times R36 \times C32) / (UB - u_{Cmin}) \tag{1}$$

Die Gleichung (1) ergibt bei den angegebenen Werten $t_1$ = 44 µs.

Die Entladung des Kondensators 32 von $u_{Cmax}$ auf $u_{Cmin}$ erfolgt über den Widerstand 40 und den Transistor 42, und ebenfalls nach einer e-Funktion, d.h.

$$u_{Cmin} = u_{Cmax} \times \exp(-t_2/(R40 \times C32)) \tag{2}$$

Iterativ erhält man aus der Gleichung (2) für $t_2$ = 5,4 µs und $u_{Cmax}$ = 3,9 V den Wert $u_{Cmin}$ = 3,52 V.

Man erhält also bei diesem Zahlenbeispiel für die Aufladung des Kondensators 32 von 3,5 V auf 3,9 V eine Zeit von $t_1$ = 44 µs, und für seine Entladung von 3,9 V auf 3,5 V eine Zeit $t_2$ = 5,4 µs, d.h. insgesamt eine Periodendauer T = 44 + 5,4 = 49,4 µs, entsprechend einer Frequenz von etwas mehr als 20 kHz. Das Tastverhältnis beträgt 5,4/49,4 = 0,11, also etwas mehr als 1/10.

Durch Wahl der Widerstände 36, 40 und des Kondensators 32 kann man die Zeiten $t_1$ und $t_2$ exakt an den zeitlichen Ablauf des Programms gemäß Fig. 3 oder Fig. 4 anpassen, und damit auch die Zeit T und das Tastverhältnis. Es hat sich gezeigt, daß das Tastverhältnis bevorzugt im Bereich 1/5 bis 1/10 liegen sollte.

Wenn die Spannung $u_{Cmax}$ am Kondensator 32 die Tendenz hat, anzusteigen, wächst auch umgekehrt der Entladestrom während der Zeit $t_2$. Deshalb hält sich die Spannung $u_C$ am Kondensator 32 bei normalem Betrieb stets im gewünschten Spannungsband 99, also bei diesem Beispiel zwischen 3,5 V und 3,9 V, und hat nicht die Tendenz, aus diesem Spannungsband 99 herauszuwandern, auch dann nicht, wenn die Bauteile durch die unvermeidlichen Toleranzen etwas andere Werte haben.

Die Zeit $t_1$, welche - ebenso wie die Zeit $t_2$ - durch das Programm vorgegeben ist, wird im Programmablauf eines Motors für interne Vorgänge benötigt, z.B. für die Steuerung der Kommutierung (vgl. Fig. 16), ggf. für die Überwachung der Motordrehzahl, die Regelung der Motordrehzahl, etc. Deshalb ist diese Zeit durch die Bedürfnisse des Motors im wesentlichen festgelegt. Sie liegt im allgemeinen zwischen 30 und 150 µs, je nach der Zahl der Funktionen, die während dieser Zeit ausgeführt werden müssen, und nach der Taktfrequenz des Mikroprozessors 20. Durch zusätzliche NOP-Befehle kann sie bei Bedarf verlängert werden.

Die Zeit $t_2$ kann im Programmablauf entsprechend den Bedürfnissen angepaßt werden, z.B. durch entsprechende NOP-Befehle S66 (Fig. 3) bzw. S88 (Fig. 4). Durch geeignete Wahl der Zeit $t_2$ kann also das Tastverhältnis auf den erforderlichen Wert festgelegt werden, und durch Wahl der Werte des Kondensators 32 und der Widerstände 36 und 40 kann die Spannung $u_C$ im gewünschten Spannungsband 99 (Fig. 8) gehalten werden, wenn der Mikroprozessor 20 normal arbeitet. Die Zeit $T = t_1 + t_2$ (Fig. 5) bestimmt, wie oft die Schleife S74 (Fig. 3 oder S94 (Fig. 4) pro Sekunde durchlaufen wird. Bei einer Zeit T = 49,4 µs wird diese Schleife z.B. in der Sekunde 20250 Mal durchlaufen, und bei jedem dieser Durchläufe schwankt die Spannung $u_C$ am Kondensator 32 zwischen $u_{Cmin}$ und $u_{Cmax}$ (Fig. 9B), bleibt also im "sicheren" Bereich 99 der Fig. 8.

Man kann also sagen, daß durch die Dimensionierung des Kondensators 32 und der Widerstände 36, 40, und durch die Überwachung der Spannung $u_C$ am Kondensator 32, der Programmablauf sozusagen durch eine analoge Schaltung abgebildet wird. Ist er normal, so ist auch die Spannung $u_C$ normal. ist der Programmablauf gestört, so nimmt die Spannung $u_C$ abnormale Werte an, und diese abnormalen Werte wirken auf den Programmablauf zurück und normalisieren ihn wieder (durch einen Resetvorgang). Dies findet statt

a) wenn $u_C$ zu niedrig wird,
und
b) wenn $u_C$ zu hoch wird.

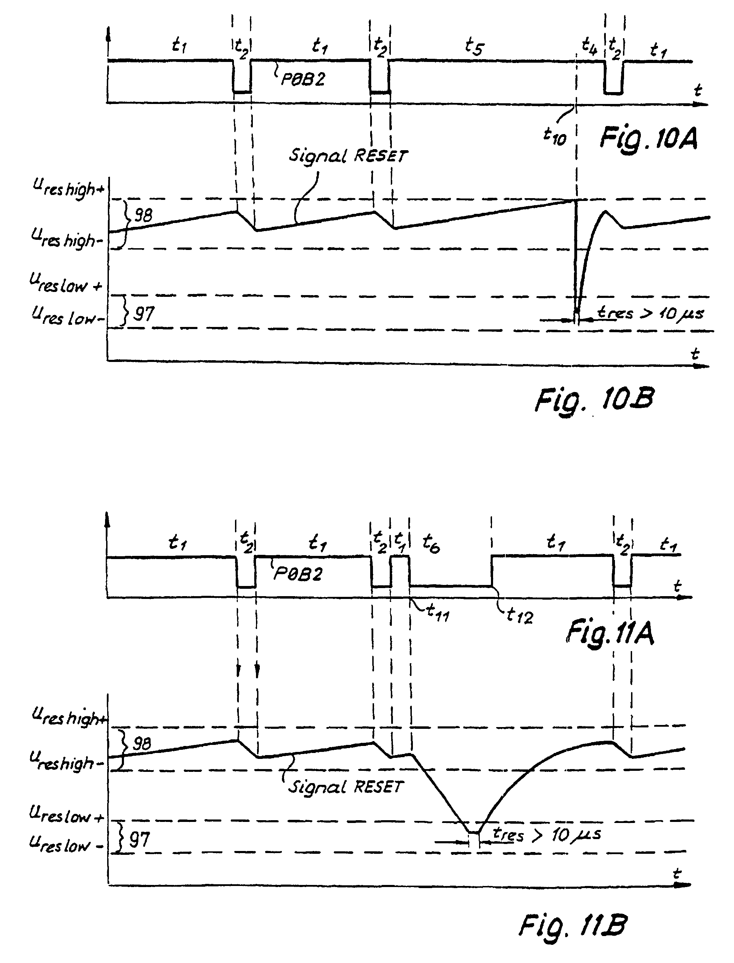

Die **Fig. 10A und 10B** zeigen den Fall der Fig. 6, d.h. das Signal P0B2 wird dauernd hoch. Während des Zeitraums $t_5$ steigt die Spannung $u_C$ an und erreicht zum Zeitpunkt $t_{10}$ den Wert $U_{reshigh+}$, wodurch die Schaltung 30 zu oszillieren beginnt und am Ausgang 48 ein niederes Signal erzeugt, das direkt dem Eingang 3 des Mikroprozessors zugeführt wird und dort einen Resetvorgang auslöst, sofern die Zeitdauer dieses niedrigen Signals eine Mindestzeitdauer von z.B. 10 µs überschreitet. Gleichzeitig wird dabei der Kondensator 32 über den Widerstand 38 etwas entladen, so daß sich die Spannung $u_c$ wieder im gewünschten Bereich befindet und erneut das Signal POB2 mit seiner Frequenz von 20 kHz erzeugt wird. Dabei ergibt sich gemäß Fig. 10A nur eine geringe Unterbrechung der Abläufe, d.h. die WD-Anordnung gemäß Fig. 1 wird innerhalb weniger µs aktiv und stellt den normalen Betrieb wieder her.

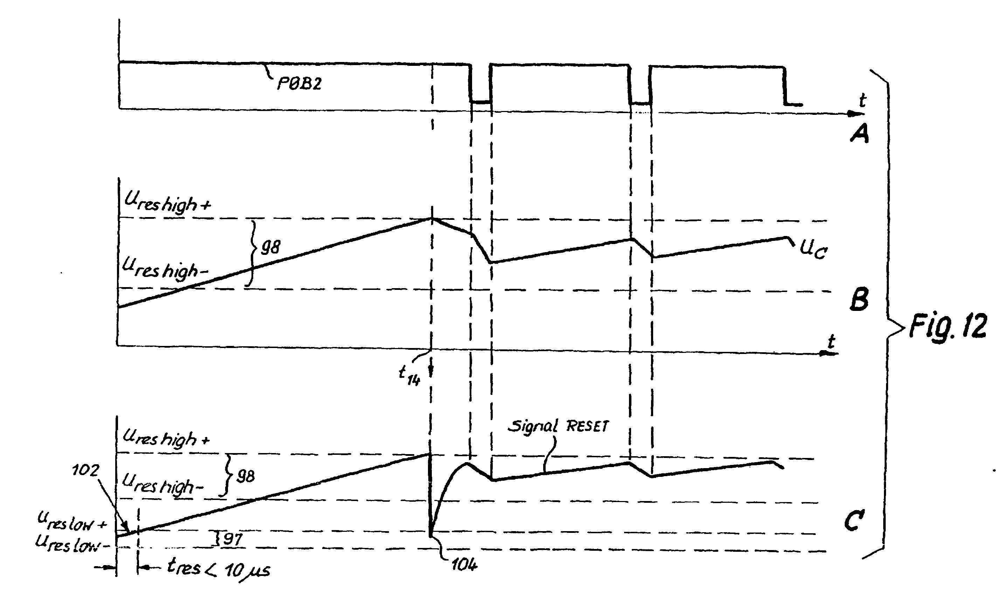

Die **Fig. 11A und 11B** zeigen den Fall, daß zum Zeitpunkt $t_{11}$ das Signal P0B2 durch einen Fehler niedrig wird, vgl. Fig. 7. In diesem Fall ist der Transistor 42 dauernd leitend, wodurch der Kondensator 32 während des Zeitraums $t_6$ entladen wird und schließlich eine Spannung im Resetbereich 97 annimmt, die einen Resetvorgang auslöst, so daß ab dem Zeitpunkt $t_{12}$ das normale Signal POB2 wieder einsetzt. Auch hier dauert, wie aus Fig. 11A zu entnehmen, der abnormale Zustand nur wenige µs, d.h. der Fehler wird sehr rasch behoben.

**Fig. 12** zeigt die Funktion des Watchdogs beim Anlauf, und zwar für den ungünstigen Fall, daß der Verlauf des Signals RESET im Resetbereich 97 (in Fig. 12C ist dieser Verlauf mit 102 bezeichnet), nur sehr kurz ist, nämlich z.B. weniger als 10 µs. lm Extremfall kann diese Zeit sogar Null betragen. Im Normalfall hat das Signal RESET beim Einschalten eine Zeitdauer von länger als 10 µs im Bereich 97, und dies führt dann sofort zu einem Power-Up-Reset gemäß Schritt S60 in Fig. 3, oder S80 in Fig. 4. Dies gilt dann, wenn der Anstieg der Betriebsspannung ausreichend schnell ist.

Da wegen der kurzen Zeitdauer des Abschnitts 102 dort kein Resetvorgang ausgelöst wird, steigt gemäß Fig. 12B die Spannung $u_C$ am Kondensator 32 so weit an, bis sie im Zeitpunkt $t_{14}$ den Wert $U_{reshigh+}$ erreicht, wodurch der Ausgang 48 des Komparators 34 niedrig wird und ein Resetsignal 104 (Fig. 12C) am Eingang 3 erzeugt, das dann einen normalen Programmstart bewirkt.

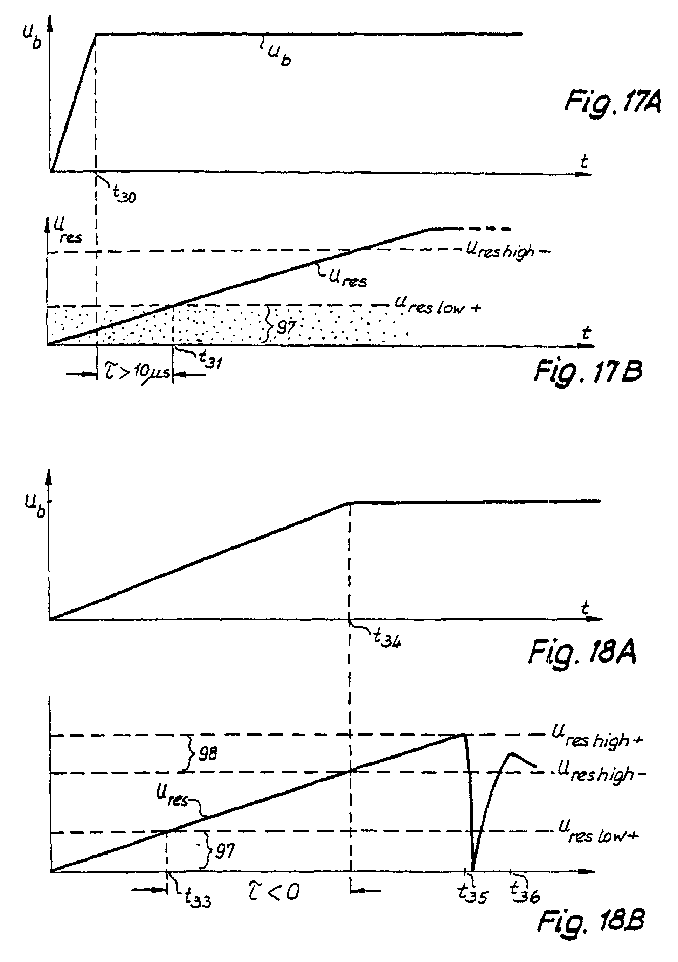

**Fig. 17A und 17B** zeigen den Fall eines normalen Power-Up-Reset. Die Betriebsspannung steigt (Fig. 17A) rasch an und hat bereits zum Zeitpunkt $t_{30}$ den Wert Ub erreicht, der für die Funktion des Mikroprozessors 20 notwendig ist. Dagegen steigt die Spannung Ures am Reseteingang 3 des Mikroprozessors 20 relativ langsam an und überschreitet erst zum Zeitpunkt $t_{31}$ den Wert $U_{reslow+}$. Der zeitliche Abstand $\tau$ zwischen $t_{30}$ und $t_{31}$ beträgt mehr als 10 µs, und deshalb erfolgt ein sicherer Resetvorgang beim Einschalten.

Anders ist das in **Fig. 18.** Dort steigt (vgl. Fig. 18A) die Betriebsspannung des Mikroprozessors 20 nur langsam auf den Wert Ub an, der für die Funktion des Mikroprozessors 20 notwendig ist, und hat Ub erst zum Zeitpunkt $t_{34}$ erreicht. Bereits zu einem früher liegenden Zeitpunkt $t_{33}$ hat aber die Spannung Ures am Reseteingang 3 den Bereich 97 verlassen, in dem ein sicherer Resetvorgang möglich gewesen wäre, d.h. ein "normaler" Power-Up-Reset ist in diesem Fall unmöglich, weil die Zeitspanne $\tau$ zwischen $t_{33}$ und $t_{34}$ kleiner als Null ist. In diesem Fall wird dann, wenn zum Zeitpunkt $t_{35}$ die Spannung $U_{reshigh+}$ erreicht wird, vom externen WD ein Resetimpuls am Ausgang 48 (Fig. 1, 13 oder 14) erzeugt, durch den ein Resetvorgang und damit ein sicherer Start des Programms etwa ab dem Zeitpunkt $t_{36}$ sichergestellt wird, vgl. Fig. 18B.

Eine derartige WD-Anordnung gemäß Fig. 1, 13 oder 14, so preiswert sie ist, gibt also eine hohe zusätzliche Sicherheit gerade bei Anwendungen, bei denen viele Störimpulse auftreten, oder bei denen nicht vorhergesagt werden kann, wie der Anstieg der Betriebsspannung nach dem Einschalten verlaufen wird.

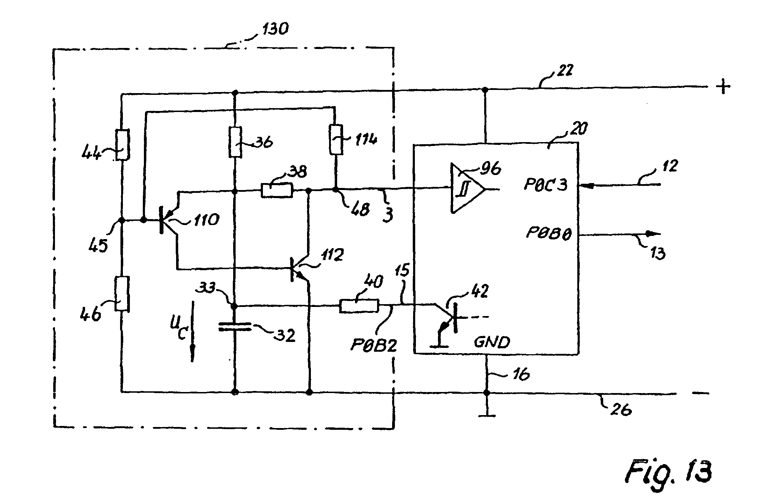

**Fig. 13** zeigt eine preiswertere Variante zu Fig. 1. Hierbei ist der Komparator 34 der Fig. 1 ersetzt durch einen pnp-Transistor 110 und einen npn-Transistor 112. Gleiche oder gleichwirkende Teile wie in Fig. 1 werden mit denselben Bezugszeichen bezeichnet wie dort und werden gewöhnlich nicht nochmals beschrieben. Die Werte der Bauteile sind im wesentlichen dieselben wie in Fig. 1 angegeben.

Der Knotenpunkt 45 ist hier verbunden mit der Basis des Transistors 110 und - über einen Widerstand 114 - mit dem Eingang 3 des Mikroprozessors 20 und dem Kollektor des Transistors 112, dessen Emitter mit der Minusleitung 26 und dessen Kollektor - über einen Widerstand 38 - mit dem Knotenpunkt 33 verbunden ist. Beim letzteren ist auch der Emitter des Transistors 110 angeschlossen, dessen Kollektor mit der Basis des Transistors 112 verbunden ist.

Die Wirkungsweise ist dieselbe wie bei Fig. 1, d.h. wenn die Spannung $u_C$ die Schwellenspannung des Transistors 110 erreicht hat, wird dieser leitend, so daß auch der Transistor 112 leitend wird und über den Widerstand 38 den Kondensator 32 entlädt und über den Widerstand 114 (entsprechend dem Widerstand 50 der Fig. 1) die Schwellenspannung des Transistors 110 reduziert und dem Eingang 3 des Mikroprozessors 20 ein niedriges Signal als Resetsignal zuführt.

Wenn der Kondensator 32 genügend entladen ist, wird der Transistor 110 wieder nichtleitend, ebenso der Transistor 112, so daß sich der Kondensator 32 erneut über den Widerstand 36 aufladen kann.

Auch hier handelt es sich also im Prinzip um einen Oszillator, wobei die beiden Transistoren 110, 112 in Kombination einen Ersatz für einen Unijunction-Transistor (UJT) bilden. Der Oszillator, der hier mit 130 bezeichnet ist, wird ebenfalls dadurch von einer Oszillation abgehalten, daß der Kondensator 32 über den Widerstand 40 ständig mit einem kleinen Strom entladen wird, solange der Mikroprozessor 20 ordnungsgemäß arbeitet und an seinem Ausgang 15 das Signal P0B2 gemäß Fig. 5 erzeugt, wie bereits ausführlich beschrieben.

Die Schaltung nach Fig. 13 hat zwar eine stärkere Temperaturabhängigkeit als die Schaltung nach Fig. 1, hat sich aber in praktischen Versuchen gut bewährt.

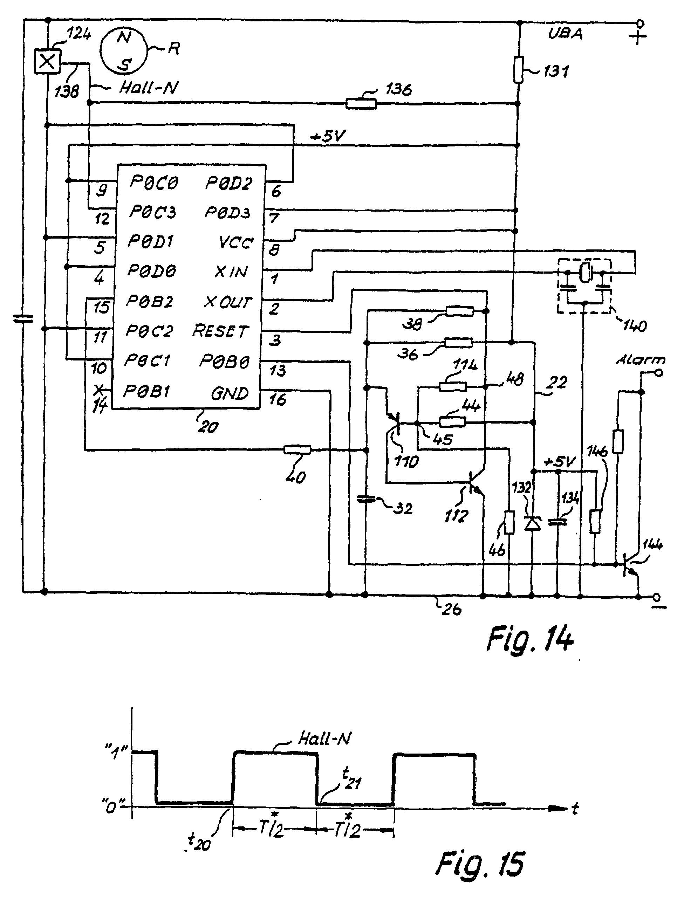

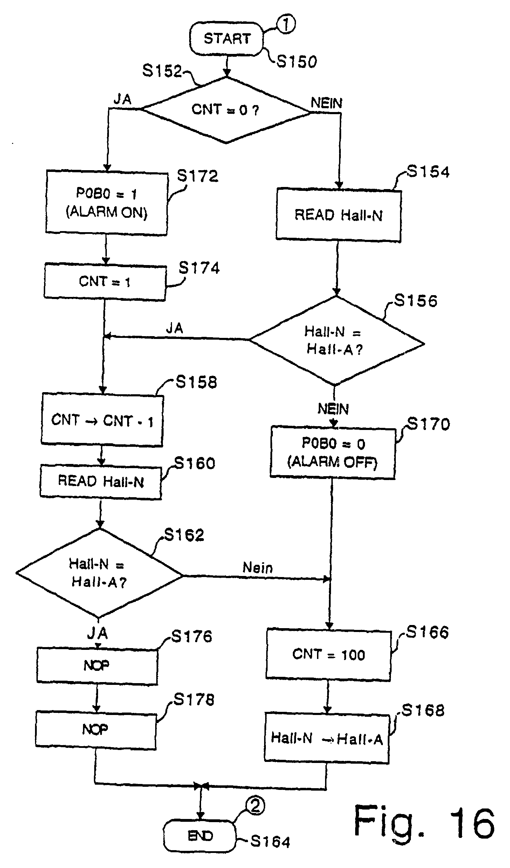

**Fig. 14** zeigt die Anwendung der Schaltung nach Fig. 13 bei einer Anordnung zur Drehzahlüberwachung, z. B. für einen Motor, von dem hier nur der permanentmagnetische Rotor R schematisch dargestellt ist, welcher in der Nähe eines Hall-IC 124 angeordnet ist, so daß dieser Hall-IC bei Drehung des Rotors R digitale Hallsignale Hall-N abgibt, wie sie in **Fig. 15** schematisch dargestellt sind. Bei einer bestimmten Drehzahl des Rotors R hat der hohe Bereich dieser Signale die Zeitdauer T*/2, ebenso der niedrige Bereich, wie in Fig. 15 dargestellt.

Dreht sich der zweipolige Rotor R mit einer Drehzahl von 3000 n, also 50 U/sec, so beträgt die Zeit T* 20 ms, d.h. T*/2 ist 10 ms lang.

Diese Zeit T*/2 wird vom Mikroprozessor 20 überwacht, und wenn sie über einen vorgegebenen Wert hinaus ansteigt, bedeutet dies, daß der Rotor R sich zu langsam dreht oder stillsteht. In diesem Fall wird ein Alarm ausgelöst. Die WD-Schaltung nach der Erfindung hat u.a. die Funktion, eine derartige Drehzahlüberwachung außerordentlich zuverlässig zu machen. Außerdem ist eine solche Drehzahlüberwachung sehr preiswert und kann auf sehr kleinem Raum montiert werden, z.B. auch in einem kleinen elektronisch kommutierten Motor.

In Fig. 14 werden für gleiche oder gleichwirkende Teile wie in Fig. 13 dieselben Bezugszeichen bezeichnet wie dort, und die betreffenden Teile werden gewöhnlich nicht nochmals beschrieben. Mittels eines Vorwiderstands 131, einer Zenerdiode 132 und eines Glättungskondensators 134 wird an der Leitung 22 eine geregelte Gleichspannung von z.B. +5 V erzeugt, ausgehend von einer Spannung UBA von z.B. 12 V, an welche der Hall-IC 124 direkt angeschlossen ist. An die Leitung 22 sind die Anschlüsse 4, 7, 8, 9 und 18 des Mikroprozessors 20 angeschlossen. Mit 136 ist der Pullup-Widerstand für den Ausgang 138 des Hall-IC 124 bezeichnet, der mit dem Anschluß 12 des Mikroprozessors 20 verbunden ist. (Diese Anschlüsse sind in Fig. 2 vergrößert dargestellt, ebenso die Signalbezeichnungen dieser Anschlüsse).

An die Anschlüsse 1 und 2 des Mikroprozessors 20 ist ein Schwingquarz 140 angeschlossen. Die Anschlüsse 5, 6, 11, 16 sind mit der Minusleitung 26 verbunden.

Bei Erzeugung eines Alarmsignals wird am Ausgang 13 ein hohes Signal P0B0 = 1 erzeugt, so daß ein Transistor 144 über einen Widerstand 146 einen Basisstrom erhält, leitend wird, und an einem Ausgang ALARM ein entsprechendes Signal erzeugt, z.B. ein akustisches oder ein optisches Signal (nicht dargestellt).

Die Drehzahl, die überwacht werden soll, z.B. 1500 oder 3000 n, wird dadurch kodiert, daß bestimmte Eingänge des Mikroprozessors 20 auf bestimmte Potentiale gelegt werden, z.B.die Eingänge 6, 7, 9, 4, 5, 10 und 11.

**Fig. 16** zeigt den Programmteil S70 der Fig. 3 und 4 für den Fall einer Drehzahl-Überwachung, wie sie in Fig. 14 dargestellt ist. Der Programmteil beginnt bei Schritt S150, entsprechend der Stelle, die in Fig. 3, 4 und 16 mit ① bezeichnet ist. (Sofern das Programm für die Kommutierung eines elektronisch kommutierten Motors verwendet wird, entspricht dieser Programmteil einem Zählschteifendurchlauf bei der Kommutierungszeitmessung).

Bei S152 wird geprüft, ob ein Zähler CNT (im Mikroprozessor 20) den Wert 0 hat. (Wie bereits beschrieben, wird dieser Wert bei der Initialisierung in S62 oder S82 auf 100 gesetzt, also z.B. nach einem Resetvorgang). Falls nein, wird im Schritt S154 der Wert des Hallsignals am Ausgang 138 gelesen, und im Schritt S156 wird verglichen, ob dieser Wert Hall-N mit einem zuvor gespeicherten Wert Hall-A identisch ist. Identität bedeutet, daß sich das Hallsignal nicht geändert hat. Fehlende Identität bedeutet, daß sich das Hallsignal geändert hat, z.B. in Fig. 15 an den Stellen $t_{20}$ oder $t_{21}$.

Ist bei S156 die Antwort JA, so geht das Programm zum Schritt S158, wo der Zähler CNT um den Wert 1 dekrementiert wird. Danach wird im Schritt S160 erneut das Hallsignal am Ausgang 138 abgelesen, und im Schritt S162 wird erneut geprüft, ob sich das Hallsignal geändert hat. Hat es sich nicht geändert, so ist der Programmteil gemäß Fig. 16 beendet, und dieser geht (über die NOP-Schritte S176, 178) zum Schritt S164. Dieser Schritt ist in den Fig. 3, 4 und 16 mit ② bezeichnet.

Eine Zeitmessung erfolgt dadurch, daß Fig. 3 + Fig. 16 durchlaufen wird, oder daß Fig. 4 + Fig. 16 durchlaufen wird, was z.B. eine Zeit von 50 μs erfordert, d.h. 10 Schleifendurchläufe erfordern z.B. 10 x 50 μs = 0,5 ms, und 100 Schleifendurchläufe 5 ms. Der Zähler CNT zählt die Zahl der Schleifendurchläufe, und sein Inhalt stellt folglich ein Maß für die Zeit dar, die zwischen zwei aufeinanderfolgenden Änderungen des Signals Hall-N gemessen wird, also z. B. in Fig. 15 zwischen $t_{20}$ und $t_{21}$.

Wird im Schritt S162 festgestellt, daß sich das Hallsignal geändert hat (Antwort: Nein), so beginnt eine neue Zeitmessung im Zähler CNT, und deshalb wird im Schritt S166 dieser Zähler auf 100 zurückgesetzt, und im nachfolgenden Schritt S168 wird der neue Wert von Hall-N in das Register Hall-A geschoben und dort gespeichert.

Wird im Schritt S156 festgestellt, daß sich das Hallsignal geändert hat (Antwort: Nein), so wird im Schritt S170 das Signal P0B0 am Ausgang 13 auf "0" gesetzt, d.h. ein etwaiger zuvor vorhandener Alarm wird automatisch wieder gelöscht, denn eine Änderung des Signals Hall-N, ehe der Zähler CNT den Wert Null erreicht hat, bedeutet, daß die Drehzahl wieder in Ordnung ist.

Wird im Schritt S152 festgestellt, daß der Zähler CNT den Wert 0 hat, so bedeutet dies, daß das Programm von S150 bis S164 101 Mal durchlaufen wurde, ohne daß sich das Hallsignal Hall-N geändert hat, d.h. daß der Rotor R entweder steht, oder daß seine Drehzahl niedriger ist als eine vorgeschriebenen untere Grenzdrehzahl. Deshalb wird in diesem Fall im Schritt S172 das Signal P0B0 am Ausgang 13 zu "1" gemacht, also ein Alarm ausgelöst. Im nachfolgenden Schritt S174 wird in den Zähler CNT der Wert 1 gesetzt, damit beim darauffolgenden Schritt S158 der Zählerstand des Zählers CNT nicht negativ wird.

Es ist darauf hinzuweisen, daß das Flußdiagramm der Fig. 16 auf verschiedenen Wegen durchlaufen werden kann, und daß die hierfür jeweils benötigten Zeitdauern, unabhängig vom Weg, stets dieselben sind, z.B. 25 μs. Dies kann durch Einfügen von sogenannten inerten Befehlen in bestimmte Programmzweige erreicht werden. Z.B. sind am Ausgang JA des Programmschritts S162 zwei NOP-Befehle S176, 178 dargestellt, damit sich dort dieselbe Programmlaufzeit ergibt wie beim Durchlaufen der dazu parallelen Programmschritte S166, S168. Ggf. müssen auch an anderen Stellen des Programmteils der Fig. 16 entsprechende NOP-Befehle eingefügt werden, je nach dem Zeitverbrauch, den die einzelnen Programmbefehle haben.

Auf diese Weise wird erreicht, daß in Fig. 3 oder 4 die Zeit für das Durchlaufen einer Programmschleife immer dieselbe ist, wodurch sich für das Signal P0B2 eine konstante Frequenz ergibt.

Naturgemäß sind im Rahmen der vorliegenden Erfindung vielfache Abwandlungen und Modifikationen möglich. Insbesondere ist darauf hinzuweisen, daß die Anwendung einer erfindungsgemäßen Anordnung in keiner Weise auf die Drehzahlüberwachung eines Rotors beschränkt ist, sondern daß der Programmabschnitt S70, wie er in Fig. 16 dargestellt ist, nur ein bevorzugtes Beispiel für die verschiedenartigsten Programme ist, die im Rahmen der vorliegenden Erfindung verwendbar sind. Z.B. könnte auch während der Zeit $t_1$ der Kondensator 32 entladen und während der Zeit $t_2$ geladen werden.

**Patentansprüche**

**1.** Watchdog-Schaltung für einen Mikroprozessor oder Mikrocontroller (20), im folgenden Mikroprozessor genannt, welcher einen Steuerausgang (15) aufweist, an dem bei normaler Funktion des Mikroprozessors programmgesteuert eine periodische Impulsfolge (P0B2) mit einem vorgegebenen Tastverhältnis (t2/T) erzeugt wird,

mit einem über einen Ladekreis (36) aufladbaren Kondensator (32),

mit einem von der genannten Impulsfolge (P0B2) gesteuerten Entladekreis (40, 42) für diesen Kondensator (32) zum periodischen Entladen desselben,

wobei Ladekreis und Entladekreis so an Frequenz und/oder Tastverhältnis (t2/T) am genannten Steuerausgang (15) angepaßt sind, daß bei normalem Programmablauf die Ladung dieses Kondensators (32) über den Ladekreis (36) seiner Entladung über den Entladekreis (40, 42) entspricht, so daß die Ladespannung ($u_C$) an diesem Kondensator (32) bei normalem Programmablauf innerhalb eines vorgegebenen Spannungsbereichs (Fig. 8: 90) steigt und sinkt,

mit mindestens einer Anordnung (34; 110) zur Überwachung des Ladezustands dieses Kondensators (32), welche bei einer im normalen Betrieb nicht auftretenden hohen Ladespannung ($u_C$) dieses Kondensators (32) ein Resetsignal für den Mikroprozessor (20) erzeugt,

wobei die Ladespannung ($u_C$) des genannten Kondensators (32) einem Reseteingang (3) des Mikroprozessors (20) zugeführt wird,

und der Ladekreis (36) und der Entladekreis (40, 42) dieses Kondensators (32) so ausgelegt sind, daß beim Ausbleiben eines vorgegebenen Signals am Steuerausgang (15) die dem Reseteingang (3) zugeführte Ladespannung ($u_C$) dieses Kondensators (32) auf einen niedrigen Wert sinkt, welcher einen Resetvorgang auslöst.

2. Watchdog-Schaltung nach Anspruch 1, bei welcher das Tastverhältnis (t2/T) desjenigen Teils (Fig. 5: t2) der am Steuerausgang (15) bei normaler Funktion auftretenden periodischen Impulsfolge (P0B2), welcher die Entladung durch den Entladekreis (40, 42) steuert, im Bereich von etwa 10 bis 20 % liegt.

3. Watchdog-Schaltung nach Anspruch 1 oder 2, bei welcher der Kondensator (32) zusammen mit einer zur Überwachung seines Ladezustands dienenden Anordnung (30) einen spannungsgesteuerten Oszillator bildet, der durch eine hohe Spannung ($u_C$) am Kondensator (32) aktiviert wird.

4. Watchdog-Schaltung nach Anspruch 3, bei welcher die natürliche Schwingungsfrequenz des Oszillators niedriger ist als die Frequenz der am Steuerausgang (15) im Betrieb auftretenden periodischen Impulse (PØB2).

5. Watchdog-Schaltung nach einem der Ansprüche 1 bis 4, welche einem Mikroprozessor oder Mikrocontroller, im folgenden Mikroprozessor genannt, zugeordnet ist und welcher ein Programm für einen vom Mikroprozessor gesteuerten Prozess zugeordnet ist, in welchem Programm zur Überwachung des Mikroprozessors auf ordnungsgemäße Funktion ein zyklischer Programmablauf vorgesehen ist, der eine Abfrage für mindestens eine Speicherzelle (VAR) enthält, die bei normalem Betrieb einen vorgegebenen Wert (AB) enthält,

wobei dann, wenn diese Abfrage einen vom vorgegebenen Wert (AB) abweichenden Wert ergibt,

- der zeitliche Verlauf eines an einem Steuerausgang des Mikroprozessors auftretenden Signals (P0B2) programmgesteuert verändert,
- der zeitliche Verlauf dieses Signals (P0B2) überwacht, und
- bei einer Abweichung dieses zeitlichen Verlaufs ein Resetsignal für den Mikroprozessor erzeugt wird.

6. Watchdog-Schaltung nach Anspruch 5, bei welcher bei einem Resetvorgang mindestens eine Speicherzelle (VAR) innerhalb oder außerhalb des Mikroprozessors auf mindestens einen vorgegebenen Wert (AB) gesetzt und dieser Wert anschließend während des zyklischen Programmablaufs abgefragt wird.

7. Watchdog-Schaltung nach Anspruch 5 oder 6, bei welcher bei Auftreten eines abweichenden Wertes der Programmablauf in eine Endlosschleife (S76) umgesteuert wird, um das Signal am Steuerausgang konstant zu halten (Fig. 3).

8. Watchdog-Schaltung nach Anspruch 5 oder 6, bei welcher das Programm so ausgebildet ist, dass bei Auftreten eines abweichenden Werts Programmteile (S86, 88, 90) übersprungen werden, welche bei ihrem Durchlaufen eine Signaländerung am Steuerausgang bewirken.

9. Watchdog-Schaltung nach einem oder mehreren der Ansprüche 5 bis 8, bei welcher während der Feststellung einer Abweichung von Signalwert und/oder Frequenz des am Steuerausgang (15) des Mikroprozessors erzeugten Signals (P0B2) ein außerhalb des Mikroprozessors vorgesehener Oszillator (30) aktiviert wird, um mindestens ein Resetsignal für den Mikroprozessor zu erzeugen.

**10.** Watchdog-Schaltung nach einem oder mehreren der Ansprüche 5 bis 9, bei welcher, gesteuert durch das am Steuerausgang des Mikroprozessors auftretende Signal (P0B2), die Spannung ($u_C$) an einem Kondensator (32) durch sich wiederholende Lade- und Entladevorgänge beeinflusst wird, um diese Spannung ($U_C$) bei normalem Betrieb in einem definierten Spannungsbereich zu halten, in welchem durch diese Spannung kein Resetvorgang ausgelöst wird.

**11.** Watchdog-Schaltung nach Anspruch 10, bei welcher bei Auftreten eines vom vorgegebenen Wert abweichenden Wertes des Signals (P0B2) am Steuerausgang (15) die Spannung ($u_C$) am Kondensator (32) so verändert wird, dass sie den definierten Spannungsbereich, in welchem kein Resetvorgang ausgelöst wird, über- oder unterschreitet.

**12.** Verwendung einer Watchdog-Schaltung nach einem der vorhergehenden Ansprüche bei einer Anordnung zur Überwachung der Drehzahl eines rotierenden Teiles.

**Claims**

**1.** Watchdog circuit for a microprocessor or microcontroller (20), referred to in the following as a microprocessor, which exhibits a control output (15) at which a periodic sequence of pulses (P0B2) is produced with a predetermined pulse duty cycle (t2/T) controlled by programme when the microprocessor is operating normally,
with a capacitor (32) which can be charged through a charging circuit (36),
with a discharging circuit (40, 42) controlled by the named sequence of pulses (P0B2) for this capacitor (32) for periodic discharge thereof,
the charging circuit and discharging circuit being matched to the named control output (15) in terms of frequency and/or pulse duty cycle (t2/T) so that when the programme is running normally the charging of this capacitor (32) through the charging circuit (36) matches its discharge through the discharging circuit (40, 42), so that the charging voltage ($u_C$) at this capacitor (32) rises and falls within a predetermined voltage range (fig. 8: 90) when the programme is running normally,
with at least one arrangement (34; 110) for monitoring the state of charge of this capacitor (32), which produces a reset signal for the microprocessor (20) when the charging voltage ($u_C$) of this capacitor (32) is at a high level which does not occur during normal operation, the charging voltage ($u_C$) of the named capacitor (32) being fed to a reset input (3) of the microprocessor (20),
the charging circuit (36) and the discharging circuit (40, 42) of this capacitor (32) being designed so that in the absence of a predetermined signal at the control output (15) the charging voltage ($u_C$) of this capacitor (32) fed to the reset input (3) drops to a low value which triggers a reset operation.

**2.** Watchdog circuit according to claim 1, in which the pulse duty cycle (t2/T) of the part (fig. 5: t2) of the periodic sequence of pulses (P0B2) which occurs at the control output (15) during normal operation and which controls the discharge through the discharging circuit (40, 42), lies in the range from approximately 10 to 20%.

**3.** Watchdog circuit according to claim 1 or 2, in which the capacitor (32) together with an arrangement (30) serving to monitor its state of charge forms a voltage-controlled oscillator which is activated by a high voltage ($u_C$) at the capacitor (32).

**4.** Watchdog circuit according to claim 3, in which the natural oscillation frequency of the oscillator is lower than the frequency of the periodic pulses (P0B2) occurring at the control output (15) during operation.

**5.** Watchdog circuit according to one of claims 1 to 4, which has an associated microprocessor or microcontroller, referred to in the following as a microprocessor, and which has an associated programme for a process controlled by the microprocessor, which programme incorporates a cyclic programme routine for monitoring the correct operation of the microprocessor and contains an interrogation routine for at least one memory cell (VAR) which contains a predetermined value (AB) during normal operation, and when this interrogation routine gives a value which differs from the predetermined value (AB),

- the form of a signal (P0B2) occurring at a control output of the microprocessor as a function of time is changed controlled by programme,
- the form of this signal (P0B2) as a function of time is monitored and
- when this form as a function of time differs, a reset signal is produced for the microprocessor.

6. Watchdog circuit according to claim 5, in which in the event of a reset operation at least one memory cell (VAR) inside or outside the microprocessor is set to at least one predetermined value (AB) and this value is then interrogated during the cyclic programme routine.

7. Watchdog circuit according to claim 5 or 6, in which in the event of a different value occurring the programme routine is switched to an endless loop (S76) in order to keep the signal at the control output constant (fig. 3).

8. Watchdog circuit according to claim 5 or 6, in which the programme is designed so that in the event of a different value occurring programme parts (S86, 88, 90) which when run through produce a change in signal at the control output, are skipped.

9. Watchdog circuit according to one or more of claims 5 to 8, in which on detection of a deviation from the signal value and/or frequency of the signal (P0B2) produced at the control output (15) of the microprocessor, an oscillator (30) provided outside the microprocessor is activated in order to produce at least one reset signal for the microprocessor.

10. Watchdog circuit according to one or more of claims 5 to 9, in which, controlled by the signal (P0B2) occurring at the control output of the microprocessor, the voltage ($u_C$) at a capacitor (32) is affected by repetitive charging and discharging operations in order to keep this voltage ($u_C$) within a defined voltage range in which no reset operation is triggered by this voltage during normal operation.

11. Watchdog circuit according to claim 10, in which in the event of the signal (P0B2) at the control output (15) having a value deviating from the predetermined value, the voltage ($u_C$) at the capacitor (32) is changed so that it overshoots or undershoots the defined voltage range in which no reset operation is triggered.

12. Use of a watchdog circuit according to one of the preceding claims in an arrangement for monitoring the rotational speed of a rotating part.

**Revendications**

1. Circuit de chien de garde pour un microprocesseur ou un microcontrôleur (20), ci-après appelé microprocesseur, qui présente une sortie de commande (15) à laquelle est générée par programme, pendant le fonctionnement normal du microprocesseur, une suite d'impulsions périodique (P0B2) ayant un rapport cyclique (t2/T) prédéfini, avec un condensateur (32) qui peut être chargé via un circuit de charge (36),
avec un circuit de décharge (40, 42) commandé par ladite suite d'impulsions (P0B2) pour ce condensateur (32) dans un but de décharge périodique de ce dernier,
le circuit de charge et le circuit de décharge étant adaptés en fréquence et/ou rapport cyclique (t2/T) à ladite sortie de commande (15) de telle manière que lors de l'exécution normale du programme la charge de ce condensateur (32) via le circuit de charge (36) correspond à sa décharge via 1e circuit de décharge (40, 42), de sorte que la tension de charge ($u_C$) aux bornes de ce condensateur (32) augmente et diminue dans une plage de tensions prédéfinie (fig. 8 : 90) lors de l'exécution normale du programme,
avec au moins un dispositif (34 ; 110) pour la surveillance de l'état de charge de ce condensateur (32), lequel génère un signal de réinitialisation pour le microprocesseur (20) dans le cas d'une haute tension de charge ($u_C$) de ce condensateur (32) ne se produisant pas en fonctionnement normal,
la tension de charge ($u_C$) dudit condensateur (32) étant amenée à une entrée de réinitialisation (3) du microprocesseur (20),
et le circuit de charge (36) et le circuit de décharge (40, 42) de ce condensateur (32) étant conçus de telle manière qu'en cas d'absence d'un signal prédéfini à la sortie de commande (15) la tension de charge ($u_C$) de ce condensateur (32) amenée à l'entrée de réinitialisation (3) baisse à une valeur faible qui déclenche une réinitialisation.

2. Circuit de chien de garde selon la revendication 1, dans lequel le rapport cyclique (t2/T) de la partie (fig. 5 : t2) de la suite d'impulsions périodique qui commande la décharge à travers le circuit de décharge (40, 42), généré en fonctionnement normal à la sortie de commande (15), se situe dans une plage approximativement comprise entre 10 et 20 %.

3. Circuit de chien de garde selon la revendication 1 ou 2, dans lequel le condensateur (32) forme avec un dispositif (30) servant à la surveillance de son état de charge un oscillateur commandé en tension qui est activé par une haute tension (u$_C$) aux bornes du condensateur (32).

4. Circuit de chien de garde selon la revendication 3, dans lequel la fréquence d'oscillation naturelle de l'oscillateur est inférieure à la fréquence des impulsions périodiques (P0B2) générées en fonctionnement à la sortie de commande (15).

5. Circuit de chien de garde selon l'une des revendications 1 à 4, lequel est associé à un microprocesseur ou à un microcontrôleur, ci-après appelé microprocesseur, et auquel est associé un programme pour un processus commandé par le microprocesseur, programme
dans lequel il est prévu, pour la surveillance du bon fonctionnement du microprocesseur, une séquence de programme cyclique qui contient une interrogation pour au moins une cellule mémoire (VAR) qui contient, en cas de fonctionnement normal, une valeur prédéfinie (AB),
dans lequel, lorsque cette interrogation donne pour résultat une valeur différente d'une valeur prédéfinie (AB) :

- la variation en fonction du temps d'un signal (P0B2) généré à une sortie de commande du microprocesseur est modifiée par programme,
- la variation en fonction du temps de ce signal (P0B2) est surveillée et
- un signal de réinitialisation pour le microprocesseur est généré en cas de déviation de cette variation en fonction du temps.

6. Circuit de chien de garde selon la revendication 5, dans lequel, en cas de réinitialisation, au moins une cellule mémoire (VAR) à l'intérieur ou à l'extérieur du microprocesseur est mise à au moins une valeur prédéfinie (AB), valeur qui est ensuite interrogée pendant la séquence de programme cyclique.

7. Circuit de chien de garde selon la revendication 5 ou 6, dans lequel, en cas de survenue d'une valeur anormale, la séquence de programme est convertie en une boucle infinie (S76) pour maintenir le signal constant (fig. 3) à la sortie de commande.

8. Circuit de chien de garde selon la revendication 5 ou 6, dans lequel le programme est conçu de telle manière qu'en cas de survenue d'une valeur anormale, les parties de programme (S86, 88, 90) dont l'exécution provoque une modification du signal à la sortie de commande sont sautées.

9. Circuit de chien de garde selon une ou plusieurs des revendications 5 à 8, dans lequel, pendant la détection d'une déviation de la valeur et/ou de la fréquence du signal (P0B2) généré à la sortie de commande (15) du microprocesseur, un oscillateur (30) prévu à l'extérieur du microprocesseur est activé pour générer au moins un signal de réinitialisation pour le microprocesseur.

10. Circuit de chien de garde selon une ou plusieurs des revendications 5 à 9, dans lequel, sous le contrôle du signal (P0B2) généré à la sortie de commande du microprocesseur, on agit par des processus répétés de charge et de décharge sur la tension (u$_C$) présente aux bornes d'un condensateur (32) de manière à maintenir, en fonctionnement normal, cette tension (u$_C$) dans une plage de tensions définie dans laquelle cette tension ne déclenche pas de réinitialisation.

11. Circuit de chien de garde selon la revendication 10, dans lequel, si la valeur du signal (P0B2) à la sortie de commande (15) diffère de la valeur prédéfinie, la tension (u$_C$) aux bornes du condensateur (32) est modifiée de telle manière qu'elle devient supérieure ou inférieure à la plage de tensions définie dans laquelle aucune réinitialisation n'est déclenchée.

12. Utilisation d'un circuit de chien de garde selon l'une des revendications précédentes dans le cas d'un dispositif de surveillance de la vitesse d'une pièce en rotation.

Fig. 1

NEC 17103GS

Fig. 2

S60

```
RESET
POWER-UP
```

S62

```
INIT
VAR = AB
CNT = 100
```

S64

```
POB2 = 0
```

S66

```
NOP
```

S68

```
POB2 = 1
```

① S74

S70

②

S76

S72

NEIN  VAR = AB?  JA

# Fig. 3

Fig. 4

Fig.5

Fig.6

Fig.7

Fig.8

Fig. 9A

Fig. 9B

Fig. 10A

Fig. 10B

Fig. 11A

Fig. 11B

Fig. 12

POB2

$U_{res\,high+}$

$U_{res\,high-}$

98

$U_C$

$t_{14}$

Signal RESET

$U_{res\,high+}$

102

$U_{res\,high-}$

98

$U_{res\,low+}$

$U_{res\,low-}$

97

$t_{res} < 10\,\mu s$

104

A

B

C

EP 0 978 038 B1

Fig. 13

EP 0 978 038 B1

Fig. 14

Fig. 15

23

START — S150

① (circle near START)

S152 — CNT = 0 ?

JA / NEIN

S172 — P0B0 = 1 (ALARM ON)

S154 — READ Hall-N

S174 — CNT = 1

S156 — Hall-N = Hall-A?

JA

S158 — CNT → CNT - 1

NEIN

S170 — P0B0 = 0 (ALARM OFF)

S160 — READ Hall-N

S162 — Hall-N = Hall-A?

Nein

JA

S176 — NOP

S166 — CNT = 100

S178 — NOP

S168 — Hall-N → Hall-A

② 

END — S164

# Fig. 16

Fig. 17A

Fig. 17B

Fig. 18A

Fig. 18B